# FASCICULE DE BREVET EUROPEEN

(11) **EP 3 095 963 B1**
(45) Date de publication et mention de la délivrance du brevet: **07.03.2018**
(21) Numéro de dépôt: 16169671.1
(22) Date de dépôt: 13.05.2016
(51) Int. Cl.: F01D 9/04, F04D 29/54, F04D 29/02, F04D 29/16, F04D 29/64

(54) **AUBE ET VIROLE À FOURREAU DE COMPRESSEUR DE TURBOMACHINE AXIALE**
LAUFRADSCHAUFEL UND DECKBAND EINES KOMPRESSORS EINES AXIALEN TURBOTRIEBWERKS
BLADE AND SHROUD OF AXIAL TURBINE ENGINE COMPRESSOR

(30) Priorité: 21.05.2015 BE 201505316
(43) Date de publication de la demande: 23.11.2016
(73) Titulaire: Safran Aero Boosters SA, 4041 Herstal (BE)
(72) Inventeur: CORTEQUISSE, Jean-François, 3870 Heers (BE)
(74) Mandataire: Lecomte & Partners

(56) Documents cités:
- EP-A1- 1 111 246
- EP-A1- 2 586 989
- EP-A1- 2 801 702
- EP-A2- 2 434 101
- US-A- 5 074 752

## Description

### Domaine technique

L'invention concerne la fixation par fourreau d'une virole ou d'une plateforme à une aube. L'invention a également trait à une structure d'aubage de turbomachine axiale. De plus, l'invention propose un compresseur et une turbomachine axiale, notamment un turboréacteur ou un turbopropulseur d'aéronef.

### Technique antérieure

Une turbomachine comprend plusieurs compartiments dont des compresseurs et des turbines. Les compresseurs alignent plusieurs rangées annulaires d'aubes statoriques, éventuellement munies de viroles internes suspendues aux extrémités internes des aubes précitées. Ces viroles relient plusieurs aubes consécutives et supportent des couches de matériaux abradables assurant une étanchéité dynamique avec le rotor.

Une virole interne peut être suspendue de différentes manières aux aubes qui la supportent. Une virole peut être ancrée à l'aide de plaquettes de rétention scellées au travers d'ouvertures ménagées dans les extrémités d'aubes. Or, cette technique demande des manipulations complexes pour placer convenablement chaque plaquette. Ou encore, une virole interne peut présenter une série d'ouvertures prolongées par des renforts. Une matière est alors appliquée entre les renforts et les aubes pour les lier.

Le document EP2196629A1 divulgue un compresseur de turbomachine axiale comprenant une rangée annulaire d'aubes statoriques et une virole interne fixée aux extrémités internes des aubes. La virole interne est segmentée et est réalisée en un matériau composite. Elle présente une rangée annulaire d'ouvertures prolongées par des fourreaux de fixation pour les extrémités d'aubes. Un espace conséquent est ménagé entre les extrémités internes des aubes et les surfaces intérieures des fourreaux. Cet espace accueille un matériau permettant une liaison. Toutefois, la résistance de cette liaison est limitée. En raison des vibrations dans la turbomachine, des décohésions peuvent se produire.

Le document EP 2 434 101 A2 divulgue une turbomachine présentant un assemblage amortisseur. L'assemblage comporte une virole interne avec une rangée circulaire d'ouvertures dans lesquelles sont logées des extrémités d'aubes en vue de leurs maintiens. Des fourreaux amortisseurs sont collés aux extrémités des aubes afin d'apporter un amorti dans les ouvertures. Toutefois, la fixation procurée entre la virole est les aubes reste limitée.

### Résumé de l'invention

### Problème technique

L'invention a pour objectif de résoudre au moins un des problèmes posés par l'art antérieur. Plus précisément, l'invention a pour objectif d'améliorer la fixation d'une virole. L'invention a également pour objectif de sécuriser la fixation d'une virole à fourreau sur une aube.

### Solution technique

On aura bien compris que l'invention a pour objet une aube de turbomachine axiale, notamment de compresseur de turbomachine axiale, l'aube comprenant : une paroi qui comporte : une surface de guidage destiné à délimiter radialement un flux annulaire de la turbomachine, et un fourreau de fixation ; une pale qui comporte : une portion fixée dans le fourreau et une portion aérodynamique destinée à dévier le flux annulaire, remarquable en ce qu'elle comprend en outre une couche de scellement à l'interface entre la pale et le fourreau de sorte à fixer la pale à la paroi par scellement.

Par aubage on entend une surface rigide permettant de guider un écoulement.

L'invention a également pour objet une structure d'aubage de turbomachine axiale, notamment de compresseur de turbomachine axiale, la structure comprenant : une paroi qui est destinée à délimiter radialement un flux annulaire de la turbomachine et qui comporte un fourreau de fixation, une aube fixée dans le fourreau de fixation et qui s'étend radialement par rapport à la paroi, une couche de fixation à l'interface entre l'aube et le fourreau, remarquable en ce que l'interface comprend des aspérités dans lesquelles pénètre la couche de fixation de sorte à assurer un ancrage par engagement de matière afin de fixer l'aube dans la paroi.

Selon un mode avantageux de l'invention, les aspérités en contact de la couche de fixation sont formées sur l'aube et/ou à l'intérieur du fourreau, préférentiellement les aspérités sont distribuées axialement.

Selon un mode avantageux de l'invention, l'aube comprend une surface intrados et une surface extrados, des aspérités étant réparties sur la surface intrados et/ou sur la surface extrados à l'intérieur du fourreau.

Selon un mode avantageux de l'invention, l'aube comprend une surface incurvée et/ou une surface bombée à l'intérieur du fourreau, au moins une ou chacune desdites surfaces recevant des aspérités.

Selon un mode avantageux de l'invention, le fourreau comprend une entrée, une sortie et un passage étanche qui relie l'entrée à la sortie, l'entrée et la sortie étant radialement opposées et présentent chacune une forme de section aérodynamique d'aube incurvée, préférentiellement le passage traverse la paroi radialement.

Selon un mode avantageux de l'invention, le fourreau entoure l'aube, éventuellement de manière continue ; préférentiellement le fourreau est généralement profilé radialement suivant un profil épousant généralement l'aube, ledit profil présente un bord convexe.

Selon un mode avantageux de l'invention, la couche de fixation est une couche de scellement, préférentiellement la couche de fixation est un joint d'étanchéité entre le fourreau et l'aube.

Selon un mode avantageux de l'invention, la couche de fixation entoure l'aube, éventuellement l'interface est comblée par la couche de fixation.

Selon un mode avantageux de l'invention, l'aube comprend un bord d'attaque et un bord de fuite, le bord d'attaque et/ou le bord de fuite formant une/des arrête(s) vive(s), éventuellement la couche de fixation est un matériau élastique et/ou un polymère, en contact de chaque arrête vive.

Selon un mode avantageux de l'invention, la pale s'étend radialement par rapport à la paroi.

Selon un mode avantageux de l'invention, la paroi est monobloc et/ou venue de matière ; préférentiellement la paroi comprend un voile formant la surface de guidage, le voile et le fourreau étant monobloc et/ou venus de matière.

Selon un mode avantageux de l'invention, les aspérités comprennent des surfaces arrondies.

Selon un mode avantageux de l'invention, les aspérités formées sur l'aube sont des renfoncements, préférentiellement courbes.

Selon un mode avantageux de l'invention, la couche de fixation comprend de l'élastomère, éventuellement du silicone.

Selon un mode avantageux de l'invention, le ou chaque joint annulaire est adapté pour coopérer avec des léchettes du rotor de la turbomachine.

Selon un mode avantageux de l'invention, au moins une ou chaque aspérités forme une empreinte ronde, ou carrée ou en polygone sur sa surface de réception.

Selon un mode avantageux de l'invention, l'interface présente plusieurs aspérités disposées l'une derrière l'autre axialement et/ou l'une au-dessus de l'autre radialement, lesdites surfaces étant éventuellement formées sur une même surface. Ainsi, l'interface présente plusieurs variations d'épaisseurs qui augmentent l'engagement de matière.

L'invention a également pour objet un compresseur de turbomachine, notamment un turboréacteur d'aéronef, le compresseur comprenant une virole interne avec des fourreaux, une rangée annulaire d'aubes fixées dans les fourreaux à l'aide de joints de fixation, remarquable en ce que les aubes et/ou les fourreaux comprennent des aspérités engageant les joints de fixation.

L'invention a également pour objet un compresseur de turbomachine axiale, notamment un compresseur basse pression, le compresseur comprenant au moins une structure d'aubage, remarquable en ce que la ou chaque structure d'aubage est conforme à l'invention, préférentiellement le compresseur comporte plusieurs aubes agencées en une ou plusieurs rangées annulaires d'aubes.

Selon un mode avantageux de l'invention, la paroi est commune à une série de structures d'aubage, par exemple consécutives dans une même rangée annulaire.

Selon un mode avantageux de l'invention, la paroi est une virole ou un segment angulaire de virole fixé(e) à plusieurs aubes.

Selon un mode avantageux de l'invention, la paroi est une virole interne ou un segment angulaire de virole interne fixé(e) à plusieurs aubes d'une même rangée.

Selon un mode avantageux de l'invention, la paroi est une paroi composite à matrice organique, et éventuellement à fibres de longueurs inférieures à 10mm, préférentiellement inférieures à 3mm.

Selon un mode avantageux de l'invention, la paroi comprend une surface interne et au moins un joint annulaire, notamment au moins une couche de matériau abradable recouvrant ladite surface interne, le joint annulaire étant éventuellement en contact de plusieurs fourreaux ou de chaque fourreau.

Selon un mode avantageux de l'invention, la paroi comprend un joint annulaire qui est radialement et/ou axialement à distance des fourreaux.

Selon un mode avantageux de l'invention, la paroi comprend un profil de révolution avec une base s'étendant principalement axialement et deux rallonges radiales s'étendant radialement vers l'intérieur depuis l'amont et l'aval de la base ; chaque extrémité radiale interne de rallonge comprenant un joint d'étanchéité annulaire, notamment un joint abradable.

Selon un mode avantageux de l'invention, les fourreaux forment au moins une rangée annulaire de fourreaux, préférentiellement plusieurs rangées annulaires de fourreaux.

Selon un mode avantageux de l'invention, la portion d'aube logée dans le fourreau présente une corde moyenne inclinée d'au moins 5° par rapport à l'axe de rotation du compresseur, préférentiellement au moins 10°. Par ce biais le joint de fixation travaille en compression et limite le cisaillement.

Selon un mode avantageux de l'invention, le fourreau est débouchant, l'aube traversant de part en part le fourreau, préférentiellement l'aube comprend deux portions de même longueur qui disposées de part et d'autre du fourreau.

Selon un mode avantageux de l'invention, le joint annulaire est en contact d'au moins une ou plusieurs couches de fixation.

L'invention a également pour objet une turbomachine axiale, notamment un turboréacteur d'aéronef, comprenant au moins une structure d'aubage, remarquable en ce que la ou chaque structure est conforme à l'invention, préférentiellement la turbomachine comprend un compresseur, le compresseur étant conforme à l'invention.

De manière générale, les modes avantageux de chaque objet de l'invention sont également applicables aux autres objets de l'invention. Dans la mesure du possible, chaque objet de l'invention est combinable aux autres objets.

### Avantages apportés

L'invention permet d'augmenter l'ancrage entre l'aube et le fourreau via la couche de fixation puisqu'elle exploite un engagement de matière. La fixation est assurée par la résistance en cisaillement de la couche en plus de ses éventuelles qualités adhésives. La portion d'aube recevant des aspérités est incurvée, si bien que ses aspérités subissent des efforts de traction-compression et de cisaillement répartis différemment. L'éventuelle rupture de la couche de fixation pourra être plus progressive.

L'invention permet d'utiliser des matériaux formant un bloc de matière, éventuellement à adhésion réduite. En cas de remplacement d'une aube ou d'un segment de virole, l'enlèvement de la couche de fixation est simplifié puisqu'elle colle peu. Une couche thermoplastique peut ainsi être enlevée par traitement thermique, ce qui réduit ou supprime les opérations physiques et/ou chimiques nécessaires. Tout autre matériau fondant à une température inférieure à celle des fourreaux peut convenir.

### Brève description des dessins

La figure 1 représente une turbomachine axiale selon l'invention.
La figure 2 est un schéma d'un compresseur de turbomachine selon l'invention.
La figure 3 illustre une vue de côté d'une structure d'aubage selon l'invention.
La figure 4 esquisse une coupe de la structure d'aubage selon l'invention suivant l'axe 4-4 tracé sur la figure 3.

### Description des modes de réalisation

Dans la description qui va suivre, les termes intérieur ou interne et extérieur ou externe renvoient à un positionnement par rapport à l'axe de rotation d'une turbomachine axiale. La direction axiale correspond à la direction le long de l'axe de rotation de la turbomachine.

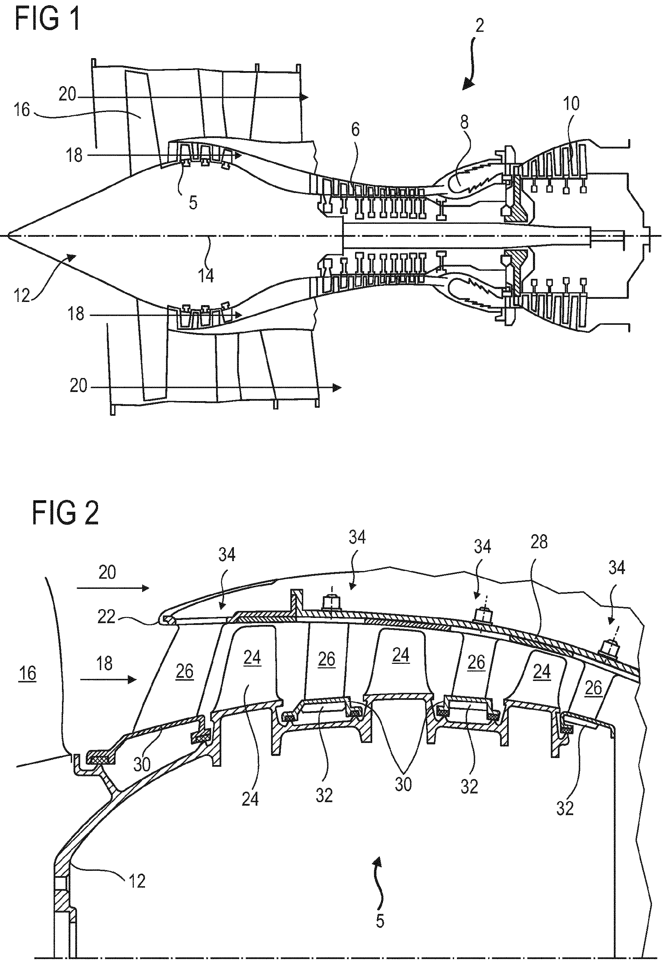

La figure 1 représente de manière simplifiée une turbomachine axiale. Il s'agit dans ce cas précis d'un turboréacteur double-flux apte à exercer une poussée pour la propulsion d'un aéronef. Le turboréacteur 2 comprend un premier niveau de compression, dit compresseur basse-pression 5, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 5 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8. Des moyens de démultiplication peuvent augmenter la vitesse de rotation transmise aux compresseurs.

Un ventilateur d'entrée communément désigné fan 16 ou soufflante 16 est couplé au rotor 12 et génère un flux d'air qui se divise en un flux primaire 18 traversant les différents niveaux susmentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale telle que celle de la figure 1. Le compresseur peut être un compresseur basse-pression 5. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 5 comprend plusieurs redresseurs, en l'occurrence quatre, qui contiennent chacun au moins une rangée d'aubes statoriques 26. Les redresseurs sont associés au fan 16 ou à une rangée d'aubes rotoriques 24 pour redresser le flux d'air 18, de sorte à convertir la vitesse du flux en pression statique.

Les aubes statoriques 26 s'étendent essentiellement radialement depuis un carter extérieur 28, et peuvent y être fixées et immobilisées à l'aide d'axes. Elles sont régulièrement espacés les unes des autres, et présentent une même orientation angulaire dans le flux 18. Avantageusement, les aubes d'une même rangée sont identiques. Chaque aube statorique 26 présente un empilement radial de sections aérodynamiques configurées pour pouvoir dévier le flux primaire.

Au moins un ou chaque redresseur peut comprendre une paroi 30, notamment une virole interne 30. La paroi 30 est fixée aux extrémités internes des aubes statoriques à l'aide de fourreaux 32. Au moins une ou chaque virole peut être circulaire ou formée de segments angulaires. La paroi peut être formée de portions, chacune dédiée à une aube statorique, ces portions pouvant être des plateformes d'aubes. La réunion d'une aube et de la paroi, ou du moins d'une portion de paroi, peut former une structure d'aubage 34. La turbomachine, et/ou le compresseur 5 peuvent comporter plusieurs structures d'aubages 34 alignées en une ou plusieurs rangées annulaires.

Une paroi 30 peut ainsi relier plusieurs aubes puisqu'elle y est fixée. La paroi 30 peut comprendre un matériau polymère, notamment un matériau composite à matrice organique. Le composite peut être chargé de fibres courtes, c'est-à-dire de fibres de longueur moyenne inférieure à 10mm, préférentiellement inférieure à 5mm, plus préférentiellement inférieure à 2mm. La paroi 30 peut naturellement être réalisée en métal. La virole, donc la paroi 30, peut être moulée, ou être réalisée par fabrication additive afin de réaliser des formes complexes, par exemple des contres dépouilles dans les fourreaux 32.

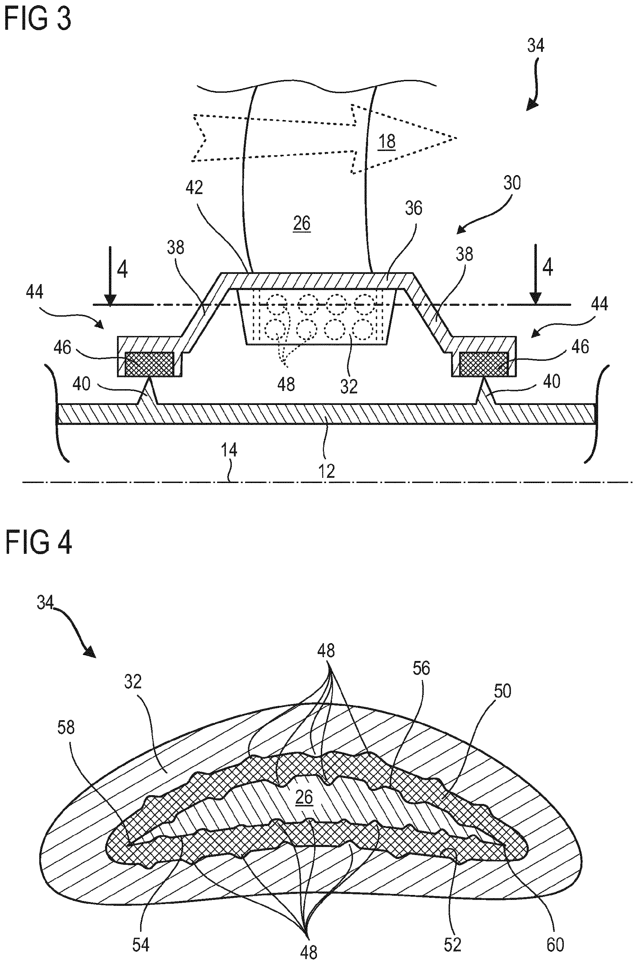

La figure 3 représente une vue de profil d'une structure d'aubage 34 d'un compresseur, par exemple le compresseur illustré en figure 2.

La paroi 30 peut comprendre un profil de révolution autour de l'axe de rotation de la turbomachine 14. Le profil peut comprendre une base 36, par exemple une base centrale 36, qui est liée à l'aube 26. La base 36 s'étend principalement axialement, et peut être sensiblement inclinée par rapport à l'axe 14. Le profil peut également comporter deux rallonges radiales 38, une amont et une aval. Chacune d'elle s'étend depuis la base 36 vers le rotor 12, en particulier vers une nervure annulaire 40 également appelée léchette 40 du rotor 12. Elles peuvent s'écarter l'une de l'autre vers l'intérieur. Ainsi, la base 36 génère par rotation un ruban sensiblement tubulaire, et les rallonges 38 donnent naissance à des brides radiales. Cette configuration de paroi 30 présente un aspect allongé axialement.

La paroi 30 peut comprendre une surface de guidage 42 et/ou de délimitation du flux annulaire 18 de la turbomachine. Cette surface 42, par exemple externe, peut être généralement tubulaire ou en arc de cercle. Elle est disposée entre le fourreau 32 et la pale de l'aube 26. La pale est la portion de l'aube 26 destinée à s'étendre radialement dans le flux 18, elle forme la majorité radiale de l'aube 26.

Au moins une ou chaque paroi 30 peut supporter un dispositif d'étanchéité dynamique 44 qui entoure le rotor 12. Au moins un ou chaque dispositif d'étanchéité 44 peut comporter une ou plusieurs couches annulaires d'étanchéité 46 qui coopèrent avec la surface externe du rotor 12, notamment avec ses léchettes 40. Une couche d'étanchéité 46 peut être réalisée en matériau abradable, c'est-à-dire un matérieu friable, qui se désagrège en poudre en cas de contact avec les léchettes 40. Ainsi le dispositif d'étanchéité 44 est apte à entrer en contact avec le rotor 12 sans le détériorer ; il peut donc être conçu pour venir au plus près du rotor 12, ce qui permet d'optimiser l'étanchéité dynamique. Au moins une ou chaque couche d'étanchéité 46 peut être portée par une des rallonges radiales 38 du profil de la paroi 30. Une telle configuration est d'ailleurs connue du document EP2801702 A1.

Suivant une variante de l'invention, le joint d'étanchéité comprend une couche comblant l'espace annulaire entre la base 36 et les rallonges 38 de la paroi 30. Cette couche, par exemple abradable peut être en contact des fourreaux 32, et éventuellement en obturer une ouverture. Le joint d'étanchéité peut également être en contact de chaque couche de fixation.

La paroi 30 est reliée à l'aube 26 grâce à son fourreau de fixation 32, par exemple disposé au niveau de la base 36. Chaque aube 26 d'une rangée ou de chaque rangée peut ainsi être fixée à une paroi 30 du compresseur. Afin d'améliorer la fixation, et éventuellement l'étanchéité, l'interface entre l'aube et le fourreau est colmatée par une couche de fixation. La rétention est encore améliorée à l'aide d'aspérités 48 à l'interface aube-fourreau ; lesdites apérités 48 pouvant être réparties radialement et axialement dans l'interface.

Selon l'invention, la structure d'aubage 34 pourrait être formée sur tout aubage de la turbomachine présentée en relation avec la figure 1. La structure d'aubage 34 est ici décrite en tant que partie statorique, elle pourrait également être rotorique. Seule une extrémité d'aube 26 est ici représentée. Cependant, il est envisageable de lier les deux extrémités d'une aube à l'aide de fourreaux sur deux parois, telle un carter externe et une virole interne, les interfaces présentant chacune des aspérités et des couches de fixation. Des fixations mixtes sont envisageables, tout comme des rangées mixtes d'aubes.

La figure 4 représente une coupe de la structure d'aubage 34 suivant l'axe 4-4 tracé sur la figure 3. La couche de fixation 50 sépare le fourreau 32 de l'extrémité de l'aube statorique 26.

Le fourreau 32 forme une manche entourant l'extrémité de l'aube 26. Il peut former un conduit continu, étanche. De la sorte il peut recevoir la couche de fixation 50, par exemple sous forme pâteuse ou fluide. Le profil de sa surface interne est dérivé de celui de l'aube 26, il comprend un côté 52, par exemple intrados, qui est bombé pour augmenter le blocage aube-fourreau.

Les aspérités 48 sont réparties à la fois sur la face intrados 54 et sur la face extrados 56 de l'aube 26. La première peut être incurvée, concave. La deuxième peut être bombée, convexe. Elles peuvent également être formées sur la surface interne du fourreau 32, en l'occurrence la surface qui entoure et qui est en regard de l'extrémité de l'aube 26. Certaines aspérités 48 de l'aube 26 peuvent être en face d'aspérité du fourreau 32, ce qui permet tantôt d'amincir la couche de fixation 50, tantôt de l'épaissir pour former des corps de matière plus résistants. La couche de fixation épouse l'aube et le fourreau, et en particulier les aspérités.

Les aspérités 48 sont réparties axialement sur les surfaces de l'aubes 26 et du fourreau 32. Elles peuvent former des redans, des cavités. Les aspérités 48 épousent la couche de fixation, et inversement, de sorte à assurer un ancrage par engagement de matière. Elles forment des variations d'épaisseurs sur la couche de fixation 50. Elles peuvent également former des bosses ou des dents faisant saillie sur leur surface d'implantation respective (54 ; 56).

La couche de fixation 50 entoure l'aube 26, la ceinture de manière continue et permet de conserver un écart entre l'aube 26 et son fourreau 32, par exemple pour éviter leur contact, pour les isoler. En particulier la couche de fixation 50 enveloppe le prolongement du bord d'attaque 58 et le prolongement du bord de fuite 60. La couche de fixation 50 peut être un matériau polymère, permettant de résister à l'aspect saillant, tranchant du bord d'attaque 58 et du bord de fuite 60. Ainsi la couche de fixation 50 répartit les contraintes des bords (58 ; 60) vers le fourreau pour le préserver.

La couche de fixation 50 peut être une couche de scellement 50. Elle peut être un matériau mis en oeuvre sous forme pâteuse, puis qui durcit afin d'ancrer l'aube 26 dans le fourreau 32. La couche de scellement 50 peut être un polymère, par exemple du polyamide. La couche de fixation 50 peut également former un joint d'étanchéité au travers du passage délimité par le fourreau 32. Elle peut être un élastomère, tel un silicone.

## Revendications

1. Structure d'aubage (34) de turbomachine axiale, notamment de compresseur (5 ; 6) de turbomachine axiale (2), la structure (34) comprenant :
- une paroi (28 ; 30) qui est destinée à délimiter radialement un flux annulaire (18 ; 20) de la turbomachine et qui comporte un fourreau de fixation (32),
- une aube (24 ; 26) fixée dans le fourreau de fixation (32) et qui s'étend radialement par rapport à la paroi (28 ; 30),
- une couche de fixation (50) à l'interface entre l'aube (24 ; 26) et le fourreau (32),
l'interface comprend des aspérités (48) dans lesquelles pénètre la couche de fixation (50) de sorte à assurer un ancrage par engagement de matière afin de fixer l'aube (24 ; 26) dans la paroi (28 ; 30)
**caractérisée en ce que**
la couche de fixation (50) entoure l'aube (24 ; 26).

2. Structure d'aubage (34) selon la revendication 1, **caractérisée en ce que** les aspérités (48) en contact de la couche de fixation (50) sont formées sur l'aube (24 ; 26) et/ou à l'intérieur du fourreau (32), préférentiellement les aspérités (48) sont distribuées axialement.

3. Structure d'aubage (34) selon l'une des revendications 1 à 2, **caractérisée en ce que** la paroi (28 ; 30) est monobloc et/ou venue de matière ; préférentiellement la paroi comprend un voile, le voile et le fourreau (32) étant monobloc et/ou venus de matière.

4. Structure d'aubage (34) selon l'une des revendications 1 à 3, **caractérisée en ce que** l'aube (24 ; 26) comprend une surface incurvée (54) et/ou une surface bombée (56) à l'intérieur du fourreau (32), au moins une ou chacune desdites surfaces (54 ; 56) recevant des aspérités (48).

5. Structure d'aubage (34) selon l'une des revendications 1 à 4, **caractérisée en ce que** la couche de fixation (50) est une couche de scellement (50), préférentiellement la couche de fixation (50) est un joint d'étanchéité entre le fourreau (32) et l'aube (24 ; 26).

6. Structure d'aubage (34) selon l'une des revendications 1 à 5, **caractérisée en ce que** l'interface est comblée par la couche de fixation (50).

7. Structure d'aubage (34) selon l'une des revendications 1 à 6, **caractérisée en ce que** l'aube (24 ; 26) comprend un bord d'attaque (58) et un bord de fuite (60), le bord d'attaque (58) et/ou le bord de fuite (60) formant une/des arrête(s) vive(s), éventuellement la couche de fixation (50) est un matériau élastique et/ou un polymère, en contact de chaque arrête vive (58 ; 60).

8. Compresseur (5 ; 6) de turbomachine axiale (2), notamment un compresseur basse pression (5), le compresseur (5 ; 6) comprenant au moins une structure d'aubage (34), **caractérisé en ce que** la ou chaque structure d'aubage (34) est conforme à l'une des revendications 1 à 7, préférentiellement le compresseur (5 ; 6) comporte plusieurs aubes (24 ; 26) agencées en une ou plusieurs rangées annulaires d'aubes (24 ; 26).

9. Compresseur (5 ; 6) selon la revendication 8, **caractérisé en ce que** la paroi est une virole interne (30) ou un segment angulaire de virole interne (30) fixé(e) à plusieurs aubes (24 ; 26) d'une même rangée.

10. Compresseur (5 ; 6) selon l'une des revendications 8 à 9, **caractérisé en ce que** la paroi (28 ; 30) est une paroi (28 ; 30) composite à matrice organique, et éventuellement à fibres de longueurs inférieures à 10 mm, préférentiellement inférieures à 3mm.

11. Compresseur (5 ; 6) selon l'une des revendications 8 à 9, **caractérisé en ce que** la paroi (28 ; 30) comprend une surface interne et au moins un joint annulaire (46), notamment au moins une couche de matériau abradable (46) recouvrant ladite surface interne, le joint annulaire étant éventuellement en contact de plusieurs fourreaux ou de chaque fourreau.

12. Compresseur (5 ; 6) selon l'une des revendications 8 à 11, **caractérisé en ce que** la paroi (28 ; 30) comprend un joint annulaire qui est radialement et/ou axialement à distance des fourreaux (32).

13. Compresseur (5 ; 6) selon l'une des revendications 11 à 12, **caractérisé en ce que** le joint annulaire est en contact d'au moins une ou plusieurs couches de fixation (50).

14. Compresseur (5 ; 6) selon l'une des revendications 10 à 13, **caractérisé en ce que** la paroi (30) comprend un profil de révolution avec une base (36) s'étendant principalement axialement et deux rallonges radiales (38) s'étendant radialement vers l'intérieur depuis l'amont et l'aval de la base (36) ; chaque extrémité radiale interne de rallonge (38) comprenant un joint d'étanchéité annulaire (46), notamment un joint abradable.

15. Turbomachine axiale (2), notamment un turboréacteur d'aéronef, comprenant au moins une structure d'aubage (34), **caractérisée en ce que** la ou chaque structure (34) est conforme à l'une des revendications 1 à 7, préférentiellement la turbomachine (2) comprend un compresseur (5 ; 6), le compresseur (5 ; 6) étant conforme à l'une des revendications 8 à 14.

## Patentansprüche

1. Schaufelstruktur (34) einer axialen Turbomaschine, insbesondere eines Kompressors (5; 6) einer axialen Turbomaschine (2), umfassend:
- eine Wand (28; 30) zur radialen Begrenzung einer ringförmigen Strömung (18; 20) der Turbomaschine, welche eine Befestigungshülse (32) enthält,
- eine in der Befestigungshülse (32) befestigte Schaufel (24; 26), die sich radial gegenüber der Wand (28; 30) erstreckt,
- eine Befestigungsschicht (50) an der Schnittstelle zwischen der Schaufel (24; 26) und der Hülse (32),
die Schnittstelle enthält Rauigkeiten (48), in welche die Befestigungsschicht (50) zur Gewährleistung einer durch Materialeinsatz Verankerung zwecks der Befestigung der Schaufel (24; 26) in der Wand (28; 30) eindringt;
**dadurch gekennzeichnet, dass**
die Befestigungsschicht (50) die Schaufel (24; 26) umgibt.

2. Die Schaufelstruktur (34) gemäß Anspruch 1, **dadurch gekennzeichnet, dass** die Rauigkeiten (48) in Kontakt mit der Befestigungsschicht (50) auf der Schaufel (24; 26) und/oder dem Inneren der Hülse (32) gebildet werden, vorzugsweise die Rauigkeiten (48) axial verteilt sind.

3. Die Schaufelstruktur (34) gemäß einem der Ansprüche 1 bis 2, **dadurch gekennzeichnet, dass** die Wand (28; 30) einteilig ist und/oder aus demselben Material besteht; vorzugsweise die Wand eine Dünnwand umfasst, wobei die Dünnwand und die Hülse (32) einteilig und/oder aus demselben Material sind.

4. Die Schaufelstruktur (34) gemäß einem der Ansprüche 1 bis 3, **dadurch gekennzeichnet, dass** die Schaufel (24; 26) eine gekrümmte Oberfläche (54) und/oder eine gewölbte Oberfläche (56) im Inneren der Hülse (32) umfasst, mindestens eine oder jede dieser Oberflächen (54; 56) Rauigkeiten (48) aufweist.

5. Die Schaufelstruktur (34) gemäß einem der Ansprüche 1 bis 4, **dadurch gekennzeichnet, dass** die Befestigungsschicht (50) eine Siegelschicht (50) ist, vorzugsweise die Befestigungsschicht (50) eine Abdichtung zwischen der Hülse (32) und der Schaufel (24; 26) bildet.

6. Die Schaufelstruktur (34) gemäß einem der Ansprüche 1 bis 5, **dadurch gekennzeichnet, dass** die Schnittstelle von der Befestigungsschicht (50) befüllt ist.

7. Die Schaufelstruktur (34) gemäß einem der Ansprüche 1 bis 6, **dadurch gekennzeichnet, dass** die Schaufel (24; 26) eine Vorderkante (58) und eine Hinterkante (60) umfasst, die Vorderkante und/oder die Hinterkante eine oder mehrere scharfe Kanten bilden/bildet, eventuell die Befestigungsschicht (50) aus einem elastischen Material und/oder Polymer besteht, das in Kontakt mit jeder scharfen Kante (58; 60) ist.

8. Kompressor (5; 6) einer axialen Turbomaschine (2), insbesondere ein Niederdruckkompressor (5), umfassend mindestens eine Schaufelstruktur (34), **dadurch gekennzeichnet**, dassjede Schaufelstruktur (34) gemäß einem der Ansprüche 1 bis 7 ist, vorzugsweise der Kompressor (5; 6) mehrere Schaufeln (24; 26) aufweist, die in einer oder mehreren ringförmigen Reihen von Schaufeln (24; 26) angeordnet sind.

9. Der Kompressor (5; 6) gemäß Anspruch 8, **dadurch gekennzeichnet, dass** die Wand ein Innenring (30) oder ein Winkelsegment des Innenrings (30) ist, welcher/welches an mehreren Schaufeln (24; 26) derselben Reihe befestigt ist.

10. Der Kompressor (5; 6) gemäß einem der Ansprüche 8 bis 9, **dadurch gekennzeichnet, dass** die Wand (28; 30) aus einem Verbundmaterial mit einer organischen Matrix besteht, und eventuell mit Fasern von höchstens 10 mm Länge, vorzugsweise von höchstens 3 mm Länge.

11. Der Kompressor (5; 6) gemäß einem der Ansprüche 8 bis 9, **dadurch gekennzeichnet, dass** die Wand (28; 30) eine Innenseite und mindestens eine ringförmige Dichtung (46) umfasst, wobei vorzugsweise mindestens eine Schicht aus Verschleißmaterial (46) die genannte Innenseite bedeckt, die ringförmige Dichtung eventuell in Kontakt mit mehreren oder jeder der Hülsen ist.

12. Der Kompressor (5; 6) gemäß einem der Ansprüche 8 bis 11, **dadurch gekennzeichnet, dass** die Wand (28; 30) eine ringförmige Dichtung umfasst, die radial und/oder axial von den Hülsen (32) entfernt ist.

13. Der Kompressor (5; 6) gemäß einem der Ansprüche 11 bis 12, **dadurch gekennzeichnet, dass** die ringförmige Dichtung in Kontakt mit mindestens einer oder mehreren Befestigungsschichten (50) ist.

14. Der Kompressor (5; 6) gemäß einem der Ansprüche 10 bis 13, **dadurch gekennzeichnet, dass** die Wand (30) ein Rotationsprofil mit einer Basis umfasst (36), die sich hauptsächlich axial erstreckt, sowie zwei radialen Verlängerungen (38), die sich radial nach innen - stromaufwärts und stromabwärts der Basis (36) - erstrecken, jedes innere radiale Ende der Verlängerung (38) eine ringförmige Dichtung (46), insbesondere eine verschleißbare Dichtung umfasst.

15. Axiale Turbomaschine (2), insbesondere eines Turbotriebwerks eines Luftfahrzeugs, umfassend mindestens eine Schaufelstruktur (34), **dadurch gekennzeichnet, dass** die oder jede Struktur (34) gemäß einem der Ansprüche 1 bis 7 ist, vorzugsweise die Turbomaschine (2) einen Kompressor (5; 6) enthält, wobei der Kompressor (5; 6) gemäß einem der Ansprüche 8 bis 14 ist.

## Claims

1. Blading structure (34) of an axial turbomachine, in particular of a compressor (5; 6) of an axial turbomachine (2), the structure (34) comprising:
- a wall (28; 30) which is intended to radially delimit an annular flow (18; 20) of the turbomachine and which comprises a fastening socket (32),
- a blade (24; 26) fastened in the fastening socket (32) and extending radially with respect to the wall (28; 30), and
- a fastening layer (50) at the interface between the blade (24; 26) and the socket (32),
the interface comprises asperities (48) in contact with the fastening layer (50) so as to ensure anchoring by engagement of material in order to fasten the blade (24; 26) in the wall (28; 30);
**characterized in that**
the fastening layer (50) surrounds the blade (24; 26).

2. Blading structure (34) according to Claim 1, **characterized in that** the asperities (48) in contact with the fastening layer (50) are formed on the blade (24; 26) and/or inside the socket (32), and preferably the asperities (48) are distributed axially.

3. Blading structure (34) according to either of Claims 1 and 2, **characterized in that** the wall (28; 30) forms a single piece and/or is made of the same material; preferably the wall comprises a veil, the veil and the socket (32) being made of a single piece and/or of the same material.

4. Blading structure (34) according to one of Claims 1 to 3, **characterized in that** the blade (24; 26) comprises a curved surface (54) and/or a domed surface (56) inside the socket (32), at least one or each of the said surfaces (54; 56) receiving asperities (48).

5. Blading structure (34) according to one of Claims 1 to 4, **characterized in that** the fastening layer (50) is a bonding layer (50), and preferably the fastening layer (50) is a seal between the socket (32) and the blade (24; 26).

6. Blading structure (34) according to one of Claims 1 to 5, **characterized in that** the interface is filled by the fastening layer (50).

7. Blading structure (34) according to one of Claims 1 to 6, **characterized in that** the blade (24; 26) comprises a leading edge (58) and a trailing edge (60), the leading edge (58) and/or the trailing edge (60) forming a sharp edge or edges, and, where appropriate, the fastening layer (50) is an elastic material and/or a polymer in contact with each sharp edge (58; 60).

8. Compressor (5; 6) of an axial turbomachine (2), in particular a low-pressure compressor (5), the compressor (5; 6) comprising at least one blading structure (34), **characterized in that** the or each blading structure (34) is in accordance with one of Claims 1 to 7, and preferably the compressor (5; 6) comprises a plurality of blades (24; 26) arranged in one or more annular rows of blades (24; 26).

9. Compressor (5; 6) according to Claim 8, **characterized in that** the wall is an internal shroud (30) or an angular internal shroud segment (30) fastened to a plurality of blades (24; 26) of one and the same row.

10. Compressor (5; 6) according to one of Claims 8 to 9, **characterized in that** the wall (28; 30) is a composite wall (28; 30) with an organic matrix, and, where appropriate, with fibres having lengths less than 10 mm, preferably less than 3 mm.

11. Compressor (5; 6) according to one of Claims 8 to 9, **characterized in that** the wall (28; 30) comprises an internal surface and at least one annular seal (46), in particular at least one layer of abradable material (46) covering the said internal surface, the annular seal being, where appropriate, in contact with a plurality of sockets or with each socket.

12. Compressor (5; 6) according to one of Claims 8 to 11, **characterized in that** the wall (28; 30) comprises an annular seal which is radially and/or axially at a distance from the sockets (32).

13. Compressor (5; 6) according to one of Claims 11 to 12, **characterized in that** the annular seal is in contact with at least one or several fixation layers (50).

14. Compressor (5; 6) according to one of Claims 10 to 13, **characterized in that** the wall (30) comprises a profile of revolution with a base (36) extending mainly axially and two radial extensions (38) extending radially inwards from upstream and downstream of the base (36); each internal radial end of an extension (38) comprising an annular seal (46), in particular an abradable seal.

15. Axial turbomachine (2), in particular an aircraft turbojet, comprising at least one blading structure (34), **characterized in that** the or each structure (34) is in accordance with one of Claims 1 to 7, and preferably the turbomachine (2) comprises a compressor (5; 6), the compressor (5; 6) being in accordance with one of Claims 8 to 14.
